(19) Europäisches Patentamt / European Patent Office / Office européen des brevets

(11) **EP 2 549 260 A1**

(12) **EUROPEAN PATENT APPLICATION**

(43) Date of publication:
**23.01.2013 Bulletin 2013/04**

(51) Int Cl.:
*G01N 1/28* (2006.01)  *G01N 15/14* (2006.01)
*G01N 35/00* (2006.01)  *C12Q 1/70* (2006.01)
*G01N 21/59* (2006.01)  *G03H 1/08* (2006.01)

(21) Application number: **11174554.3**

(22) Date of filing: **19.07.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Drive O2
9831 Deurle (BE)**

(72) Inventor: **Magniette, Olivier
9890 Gavere (BE)**

(74) Representative: **Brants, Johan P.E.
Brantsandpatents bvba
Guldensporenpark 75
9820 Merelbeke (BE)**

(54) **Method and system for analyzing a liquid cell sample by turbimetry and digital holographic microscopy**

(57) The invention provides a method and a system for processing a liquid cell sample into at least two subsamples, comprising the steps of:
a) providing a liquid cell sample in a first sample vial;
b) transferring a first volume of said liquid cell sample into an intermediate sample vessel;
c) determining the density of said liquid cell sample in said intermediate sample vessel;
d) calculating a first subvolume of said liquid cell sample in the intermediate sample vessel for a first analysis technique;
e) determining whether said liquid cell sample is adequate for a second analysis technique, preferably suitable for DNA or RNA based detection of for example HPV, based on said density determination;
f) transferring from the said intermediate sample vessel said first subvolume to a second vial mounted on a microscope slide; and
g) preserving a second subvolume of said liquid cell sample for said second analysis technique.

Fig. 1

## Description

## TECHNICAL FIELD

The invention pertains to the technical field of cytopathology, and more specifically, to an automated system and method which improves the reliability of the sample handling and diagnosing. A liquid cell sample is assessed by both digital means and conventional analytical techniques, prior to processing it to be used for further analytical techniques.

## BACKGROUND

Many cytological tests require the collection of a cell sample which is subsequently processed by transferring the sample to an additional vial or container or by fixing the sample onto a slide. These will then be used by pathologists, cytologists and other medical personnel in a laboratory setting to obtain a diagnosis of the medical condition of the patient. A practitioner is hence required to perform the sample-taking procedure so accurately that the subsequent analysis steps become possible. One application of a cytological test is the Papanicolaou test, commonly known as the PAP test, in which cervical cells on a slide are microscopically analyzed in order to detect aberrant cells which might point to the onset or presence of cervical cancer. Other examples of liquid cell samples which are microscopically analyzed comprise blood cells, synovial fluid, bronchial cells, and more.

Prior to processing a certain sample from a patient, it is desirable to assess the quality of the cell sample by checking a certain number of parameters. For instance, in a PAP smear test, the cell density is an important parameter, as the number of cells must comply with the Bethesda classification, which is a classification for standardizing the diagnosis result of the smears. Furthermore, certain information and characteristics from the cell sample may equally be used to come to a more clear and precise diagnosis. Such characteristics may amongst others, include for instance cell density, cell size, cell morphology, nucleus size and cytoplasmic volume.

Most cytological test require the use of solutions and fixatives that are detrimental for living cells, inevitably leading to loss of structures and information stored therein. Hence this might interfere with the possibility of a reliable interpretation and diagnosis from the sample. Inadequate processing of a sample may lead to an increased number of false negatives diagnoses. For instance, of the over 50 million cervical cytological PAP smears, which are performed in the USA each year, a high false-negative interpretation rate of 20-40% has been described (Williams et al., 1998), frequently leading to fatal consequences. Most of these false negatives are the result of inadequate sample processing.

Therefore, there is need in diagnosis for a method and device that analyses cell samples in a non-destructive, non-detrimental way, or at least provides information of the status of the sample and the cells present prior to its further processing. This will undeniably lead to a more reliable diagnosis method as more accurate information will be obtained from the analyzing sample.

Digital imaging and processing of samples has gained ground in the past years as a new and better way of analyzing cellular samples in pathology.

EP2270712 discloses a method and device for assessing the quality of a biological sample, such as a cervical cell sample, by obtaining a UV radiation reaction image of a biological sample, establishing certain predefined parameters of cells in the sample and determining the percentage of epithelial cells present in the image. The method is able to visualize cells without any staining up to a degree of cellular compartments. However, the method does require the deposition of the cells on substrate, such as a microscope slide, prior to analysis. This implies that the sample needs to be fixed in one way or another to the substrate, which is bound to cause loss of some cellular structures or morphology.

WO2010049651 discloses a method and device to prepare a virtual analytical image of a given biological sample, which includes the gathering of certain parameters linked to the sample. The image is obtained through confocal microscopy and requires the deposit of the biological sample on a sample carrier.

US20100060897 discloses a method and device for non-destructive analysis and characterization of a cell sample. The invention makes use of a digital holographic microscope for analyzing certain parameters of a cell (such as volume, size, refractive index) and to determine the number of cells in the sample.

Reliability is one of the, if not the most important concern of a diagnostic lab. In the current prior art, automated systems for analysis of cell samples for diagnostic purposes have been extensively described. Most of these systems still focus on an automated manner of depositing the cells on a carrier, which subsequently will be further processed by a practitioner and analyzed by pathologists. In some cases additional data on the processed sample will be provided in the form of a digital report or image that has been taken by microscopic means. These reports will assess various parameters of the processed sample and offer a first indication for the pathologist on the sample quality and potential presence of abnormal or aberrant cells. However, these reports are based on cells that are already been processed to some extent, such as being fixed on a recipient. This means that inherently, cellular structures will get altered or lost during the fixation process, hence losing at least part of the potential data stored therein.

There remains a need in the art for improved reliability of automated cell sample handling and to overcome the problems mentioned above. The present invention aims to improve the reliability of automated cell sampling and diagnosis linked thereon.

## SUMMARY OF THE INVENTION

The present invention provides for an system and method for preparing cytological specimens from liquid cell samples, which improves the reliability of the sample handling and diagnosing. The invention thereto aims to offer an automated system and method which provides the practitioner or the pathologist with a digital report on certain parameters of the sample and their comparison to a reference database, as well as with a digital image of the sample, prior to handling the sample. This will give the practitioner or pathologist the chance to evaluate the raw sample in an unbiased manner, by taking the provided cell sample parameters into account, as well as the image made thereof. Diagnosis can be solely based on the parameters provided by the system, or if desirable, the practitioner or pathologist can proceed by more conventional means of diagnosing. During handling, the sample will be processed in order to be further used for two different analysis tests. As such, the practitioner will be offered the chance to base his diagnosis on a wide range of data, hence enhancing the reliability of the diagnosis. Furthermore, the invention provides for an efficient method to read a label or indicia on a given sample vial and mark respectively the corresponding recipients which contain part of the transferred sample for further diagnosis means. The same indicia or label will also be found back on the digital report and image provided by the system. The system cycles automatically until all sample vials are processed and respective specimens are produced. As a result, the system can operate unattended.

Digital holographic microscopy enables the study of living cells without the need for markers or dyes, and enables quantification of the studied objects. The possibilities of digital holographic microscopy (DHM) have increased during the last years due to an increase in the development of digital sensors and computers. The method visualizes cells without any staining up to a degree of cellular and compartment distinguishability which allows to efficiently segment the cells, count their number and reliably classify them according to their histological provenience. This allows for a straightforward and trustworthy estimate of the sample quality. The outcome of this analysis is a measure of the quality of the sample and may be used by the practitioner as a starting point for diagnosis, such as deciding to perform additional histological or molecular analysis with the sample or to take a new sample.

In a first aspect, the system includes a sample vial loading station for loading of a plurality of closed sample vials. The vials include particles of interest, such as cells, tissue samples, assay product, or other material, typically dispersed in a fluid medium or collection medium. The system furthermore includes other loading stations, which can be provided with vials for receiving part of the sample.

A stirring or ultrasonic device prepares the sample for collection such as, for example, by agitating the sample in a manner so as to create a generally uniform dispersion of particles of interest throughout the sample. Once the particles cells are dispersed, they can be transferred to an intermediate sample vessel. In a preferred embodiment, the system includes a cell density or turbidity meter, which determines the cell density prior to transferring the sample to the second and potential subsequent sample vials, by measuring in the intermediate sample vessel. In a specific, preferred embodiment, the intermediate sample vessel comprises a pipet which will transfer the sample to the different sample vials.

In a further aspect, the system includes a microscope able to work in digital holography for obtaining images of a sample, said microscope comprising as elements at least:

(i) illumination means for illuminating in transmission and/or in reflection a sample and producing thereby a sample beam, said illumination means being characterized by a given spectral width having a maximum illumination wavelength, said illumination means being selected from the group consisting of temporally coherent and spatially partially coherent illumination means, temporally and spatially partially coherent illumination means, and fluorescence excitation sources. It is obvious that to take a holographic image, one needs to provide illumination means. However, in the present embodiment, the light from these illumination means may comprise spatially and temporally partially coherent light, in contrast with prior art DHM methods, which only provided highly correlated laser light. Spatially and temporally partially coherent light can be produced by e.g. a LED. A LED is cheaper than a laser and produces light with a spectrum centered around a known wavelength, which is spatially and temporally partially coherent, i.e. not as coherent as laser light, but still coherent enough to produce holographic images of the quality which is necessary for the applications at hand. LEDs also have the advantage of being available for many different wavelengths and are very small in size and easy to use or replace if necessary. Therefore, providing a method which can use spatially and temporally partially coherent light for obtaining holographic images will lead to more cost-effective devices for implementing such a method;

(ii) imaging means comprising a microscope objective having a front focal plane, and focusing means having a back focal plane;

(iii) an interferometer for generating interfering beams from the sample beam, said interferometer being located behind the microscope objective and in front of the focusing means, and comprising a first interferometer arm and a second interferometer arm, the focusing means having one front focal plane in each of said first and second interferometer arms, said first interferometer arm comprising a first beam splitter a first reflecting element and a second beam splitter, said second interferometer arm comprising the first beam splitter, a second reflecting element and the second beam splitter, wherein some of said reflecting elements and beam splitters are mounted on moving means so as to equalize the optical length of the interfering beams with an accuracy in the range of less than the maximum wavelength of the illumination means to a few maximum wavelengths;

(iv) an electronic or digital imaging device provided with a sensor which is located in the back focal plane of the focusing means, for detecting and recording the fringe interference images formed thereon by the interfering beams;

(v) processing means, such as a computer, conceived for at least processing said fringe interference images by digital holography techniques; said microscope being characterized in that said it further comprises:

(vi) tilting means located in the second interferometer arm (respectively in the first interferometer arm) for tilting the beam reflected by the second reflecting element (respectively first reflecting element) relatively to the beam reflected by the first reflecting element (respectively the second reflecting element) by a precise tilting angle in such a way to superpose the beam reflected by the first reflecting element (respectively the second reflecting element) and the beam reflected by the second reflecting element (respectively the first reflecting element) in the front focal planes of the focusing means thereby creating a precise shift between the interfering beams reflected and transmitted by the second beam splitter on the sensor of the electronic imaging device.

In a preferred embodiment, a holographic image is obtained by a differential digital holographic microscope. In further preferred embodiment of the present invention certain cell parameters such as, but not limited to the size of a cell, the morphology of a cell, the number of cells or cell density, the ratio between cytoplasm and nucleus of a cell and/or the optical density of the nucleus of a cell present on holographic image as mentioned herein above are established with means for image and/or form recognition. Said means for image and/or form recognition is preferably configured to determine a value indicative of the size of a cell, the morphology of a cell, the number of cells, the ratio between cytoplasm and nucleus of a cell and/or the optical density of the nucleus of a cell.

In a further preferred embodiment of the present invention the means for image and/or form recognition as mentioned herein above is a picture and/or form recognition data processor, a picture and/or form recognition software or a picture and/or form recognition program. In another preferred embodiment, the cell parameters as mentioned here above are provided to the practitioner in the format of a report linked to a certain sample.

In another embodiment of the present invention the parameters obtained by DHM are compared with a reference database. In a preferred embodiment of the present invention said reference database is the British Society for Clinical Cytology (BSCC) look-up table or the Bethesda System database (Bethesda system for reporting cervical/vaginal cytological diagnoses, 1993, Acta Cytol. 37, 115). In a

In a preferred embodiment, the subvolumes of the sample to be transferred will be measured based on the density measurements by turbimetry and DHM.

In a preferred embodiment, the turbimetry and DHM measurements will determine determining liquid cell sample is adequate for a second analysis technique, preferably suitable for DNA or RNA based detection of for example HPV;

In a further embodiment of the present the biological sample as mentioned herein above is a tissue sample, a biopsy sample, a brushing sample, a fine-needle-aspiration sample or a smear sample.

In a preferred embodiment of the present invention said smear sample is a cervical smear sample.

In a preferred embodiment, a vial is prepared, containing a subvolume of the sample, to be used in an analysis technique, preferably for a thin cell layer technique.

In an embodiment, the thin cell layer is obtained by centrifugation in a cytocentrifuge.

In another embodiment, the centrifugation step may comprise a cleaning step through differential centrifugation based on a density gradient.

In another preferred embodiment, a subvolume of the sample is preserved, to be used in an analysis technique, preferably for DNA or RNA based detection techniques.

In a preferred embodiment of the present invention, the DNA or RNA based detection technique detects HPV.

In another aspect, the present invention provides for a method and means to maintain a one-to-one correlation between the sample vials and the produced therefrom. When a cell sample is collected from a patient and deposited in the preservative fluid in the sample vial, creating cellular particles in a liquid suspension, the vial may be marked with unique identifying indicia corresponding to the type of sample, patient, date obtained, etc.

In a preferred embodiment, the identifying indicia may be a bar code.

In another preferred embodiment, the indicia may comprise a RFID tag.

In one embodiment, the sample vial indicia are provided at the base of the vial.

In another embodiment, the sample vial indicia are provided on the lateral side of the sample vial.

When the sample vial is loaded into the system, the indicia corresponding to the sample are identified. In the case of a bar code, a laser bar code scanner can be used.

In a preferred embodiment, derivatives, such as reports, images, vials and specimens produced from the sample are marked with indicia that are identical to the sample indicia. Once the system has labelled the derivatives according to the indicia on the sample vial, the sample is transferred.

## DESCRIPTION OF FIGURES

Figure 1 depicts a general overview of the system according to the present invention.
Figure 2 shows an upper view of the system according to the present invention.
Figure 3a and 3b show a sample vial to be used according to the present invention and the transfer of a subvolume of the liquid cell sample to the intermediate sample vial.
Figure 4 on depicts a tubular sample vessel or chamber which can be mounted to a microscope slide by means of a carrier.
Figure 5 shows a microscope slide, to be used in conjunction with the present invention, which comprises a markable region sensitive to electromagnetic radiation and which comprised an identification zone.9

## DETAILED DESCRIPTION OF THE INVENTION

The present invention concerns a method and system for preparing cytological specimens from liquid cell samples, which improves the reliability of the sample handling and diagnosing. The invention thereto aims to offer an automated system and method which provides the practitioner or the pathologist with a digital report on certain parameters of the sample, as well as with a digital image of the sample, prior to handling the sample by conventional means. This way, the practitioner or pathologist can evaluate the parameters of the unprocessed sample in an unbiased manner, as well as the image made thereof. Diagnosis can be solely based on the parameters provided by the system, or if desirable, the practitioner or pathologist can proceed by more conventional means of diagnosing. During handling, the sample will be processed in order to be further used for two different analysis tests. As such, the practitioner will be offered the chance to base his diagnosis on a wide range of data, hence enhancing the reliability of the diagnosis. Furthermore, the invention provides for an efficient method to read a label or indicia on a given sample vial and mark respectively the corresponding recipients which contain part of the transferred sample and the digital report and images made thereof for further diagnosis means. Hence, a one-to-one correlation is maintained between the initial sample vial and all its derivatives.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The term "biological sample" or "sample" as used herein refers to any specimen obtained from a biological organism, preferably a living organism. The term relates also to specimen obtained from non-living, i.e. dead biological organisms, in particular recently deceased organisms. The term "biological organism" includes in general eukaryotic systems and may also comprise sub-portions of eukaryotic systems. In particular, such organisms include higher eukaryotes. In preferred embodiments of the present invention a biological sample may be derived from an animal, preferably from a mammal, e.g. from a cat, a dog, a swine, a horse, a cattle, a sheep, a goat, a rabbit, a rat, a mouse, a monkey. Particularly preferred is a sample obtained from a human being.

The term "morphology of a cell" as used herein refers in general to the form, structure and configuration of a cell and may include aspects of the cell appearance like shape, color or pattern of internal or external part of a cell. The term "form of a cell" as used herein refers to typical cell forms like circular cells, elliptic cells, shmoo like cells, division forms like dumbbells, star-like cell forms, flat cells, scale-like cells, columnar cells, invaginated cells, cells with concavely formed walls, cells with convexly formed walls, the presence of prolongations, appendices or cilia, the presence of angles or corner etc. Typical morphologies or forms would be known to the person skilled in the art and can be derived from Junqueira et al., 2002, Basic Histology, Mcgraw-Hill editors.

The "size of a cell" as used herein may be determined in relation to a calibration mark, in relation to the size of neighboring cells, the size of all cells present on a given image or the size of cells derivable from a suitable histological database comprising data of cell sizes. Preferably, the size of a cell may be calculated in relation to a defined or established area of the image, e.g. an area comprising about 100, 200, 300, 400, 500, 600, 700, 800, 900, 1000, 2000, 4000, 6000, 8000, 10000, 15000, 20000, 25000, 30000, 35000, 38000, 40000, 43000, 45000, 50000, 60000 or 70000 $\mu m^2$. The determination of the size of a cell also encompasses in a specific embodiment the determination of the ratio between the surface area and the volume of a cell.

The "number of cells" as used herein may be determined in relation to a defined or established area of the image, e.g. an area comprising about 100, 200, 300, 400, 500, 600, 700, 800, 900, 1000, 2000, 4000, 6000, 8000, 10000, 15000, 20000, 25000, 30000, 35000, 38000, 40000, 43000, 45000, 50000, 60000 or 70000 $\mu m^2$. The determination of the number of cells may also encompass the determination of the number of cells in one cell layer, e.g. if tissues comprising more than one cell layer are analyzed. Alternatively, the number of cells in all cell layers may be determined. In such a case the number of cells per cell or tissue layer may be determined by additionally determining the number of cell layers present in the object to be analyzed, i.e. the biological sample.

The term "ratio between cytoplasm and nucleus of a cell" as used herein refers to a comparison of the area of cytoplasm and the area of nuclei present in said cytoplasm of an UV radiation reaction image according to the present invention. The area of cytoplasm may or may not comprise cell well areas or internal cell structures like vacuoles, mitochondrial etc. The area of nuclei may or may not comprise nuclear membrane districts. In case more than one nucleus should be present in a cell, either the area of one nucleus may be determined or the area of all nuclei present may be determined. The ratio of cytoplasm and nucleus of a cell may be determined for each cell individually or for any grouping or sub-grouping of cells present in a defined area of the image, e.g. an area comprising about 100, 200, 300, 400, 500, 600, 700, 800, 900, 1000, 2000, 4000, 6000, 8000, 10000, 15000, 20000, 25000, 30000, 35000, 38000, 40000, 43000, 45000, 50000, 60000 or 70000 $\mu m^2$.

The term "optical density" as used herein refers to the measure of the transmittance of an optical element for a given length at a given wavelength [lambda], preferably according to the formula:

$$OD_\lambda = \log_{10}O = -\log_{10}T = -\log_{10}(I/I_0)$$

wherein
O = the per-unit opacity
T = the per-unit transmittance IO = the intensity of the incident beam of electromagnetic radiation
I = the intensity of the transmitted beam of electromagnetic radiation

In a specific embodiment, the optical density of a nucleus of a cell in comparison to the optical density of a nucleus of a second cell may be determined.

Furthermore, the optical density of a nucleus of a cell in comparison to the optical density of the cytoplasm of a cell or vice versa may be determined. Furthermore, the optical density of all nuclei in a defined area of the image and/or of all cytoplasmic regions in a defined area of the image may be determined.

The term sample adequacy is defined as a sample in which a test result is representative or predictive of the true actual status of the entity being tested, such as the presence or absence of a specific virus (such as HPV or others) in an individual.

The present invention provides a method and system for analyzing a liquid cell sample, comprising the steps of:

a) providing at least one liquid cell sample in a sample vial;

b) transferring a first volume of said liquid cell sample into an intermediate sample vessel

c) obtaining data linked to the cells in the sample by performing differential digital holographic microscopy on said liquid cell sample in said sample vial.
In a preferred embodiment, the step c) of the method for analyzing a liquid cell sample comprises the step of

d) illuminating in transmission and/or in reflection with illumination means said liquid cell sample and producing thereby a sample beam, whereby said illumination means preferably comprise spatially and temporally partially coherent light.

It is obvious that to take a holographic image, one needs to provide illumination means. However, in the present embodiment, the light from these illumination means may comprise spatially and temporally partially coherent light, in contrast with prior art DHM methods, which only provided highly correlated laser light. Spatially and temporally partially coherent light can be produced by e.g. a LED. A LED is cheaper than a laser and produces light with a spectrum centered around a known wavelength, which is spatially and temporally partially coherent, i.e. not as coherent as laser light, but still coherent enough to produce holographic images of the quality which is necessary for the applications at hand. LEDs also have the advantage of being available for many different wavelengths and are very small in size and easy to use or replace if necessary. Therefore, providing a method which can use spatially and temporally partially coherent light for obtaining holographic images will lead to more cost-effective devices for implementing such a method.

In a more preferred embodiment, the step c) of the method for analyzing a liquid cell sample comprises the steps of

e) generating by means of the differential interferometer interfering beams from said sample beam;

f) adequately positioning and orientating the tilting means in the second interferometer arm (respectively in the first interferometer arm) for tilting the beam reflected by the second reflecting element (respectively first reflecting element) relatively to the beam reflected by the first reflecting element (respectively the second reflecting element) by a precise tilting angle in such a way to superpose the beam reflected by the first reflecting element (respectively the second reflecting element) and the beam reflected by the second reflecting element (respectively the first reflecting element) in the front focal planes of the focusing means thereby creating a precise shift between the interfering beams reflected and transmitted by the second beam splitter on the sensor of the electronic imaging device;

g) detecting and recording the fringe interference image thus formed by the interfering beams on the sensor of the imaging device;

h) sending the interference image to processing means, such as a computer;

i) processing said interference image(s) so as to extract the optical amplitude and/or phase of the sample by implementation of the phase stepping method or the Fourier transform data processing; and

j) computing said data linked to the cells in the sample from said optical amplitude and/or phase of said liquid cell sample.

In a preferred embodiment, the method for analyzing a liquid cell sample comprises the steps of

k) providing at least once a test sample in a test sample vial;

l) illuminating in transmission and/or in reflection with illumination means said test sample and producing thereby a test sample beam, whereby said illumination means preferably comprise spatially and temporally partially coherent light;

m) generating by means of the differential interferometer interfering beams from said test sample beam;

n) adequately positioning and orientating the movable part of the interferometer so as to equalize the optical length of said interfering beams with an accuracy in the range of less than the maximum wavelength of the illumination means to a few maximum wavelengths by means of the moving means.

The invention furthermore provides for a method of processing a liquid cell sample into at least two subsamples, comprising the steps of:

i) Providing at least one liquid cell sample in a first sample vial (1).

ii) Transferring a first volume part of the liquid cell sample into an intermediate sample vessel (2). The said intermediate sample vessel can take multiple forms. It one embodiment, it can be a regular sample vial with cap. In another embodiment, it can be cuvette. It yet another embodiment, it can be a sample tube, such as an eppendorf tube. In a preferred embodiment, the said intermediate sample vessel is a pipette tip, or a needle.

iii) Determining the density of the liquid cell sample in the intermediate sample vessel. In one embodiment, the determination of the density occurs through a turbidity measurement, preferentially by a turbimeter. In another embodiment, the determination of the density occurs through digital holographic microscopy (DHM). In a most preferred embodiment, determination of density occurs through both turbidity measurement and DHM.

iv) Calculating a first subvolume of said liquid cell sample in the intermediate vessel for a first analysis technique. In a preferred embodiment, the said calculation is based on both the density data acquired through turbidity measurement and through DHM. In a most preferred embodiment, the volume of the cell sample that is calculated will be suitable for the use of the liquid cell sample in a first cell analysis technique. In one embodiment, the said sample density for said first cell analysis technique be at least 500 000 cells/ml. In a preferred embodiment, the said first cell analysis technique comprises a thin cell layer analysis. In a most preferred embodiment, the said thin cell layer technique comprises a centrifugation step to deposit the cells present in the liquid cells sample on a recipient, such as a microscope slide.

v) Determining whether the liquid cell sample is adequate for a second analysis technique. In a preferred embodiment, the said second analysis technique comprises a detection technique for DNA or RNA. In a most preferred embodiment, this technique is said to be able to detect the presence of a specific virus such as HPV. The said sample adequacy may be simply reported as positive, or alternatively as >200 000 cells/ml. A sample can be inadequate when the numbers of cells in a sample is insufficient to permit detection of a signature of HPV detection (such as HPV DNA). The particular assay employed dictates the amount of sample required for positive detection; thus, as assay sensitivity improves, sample adequacy requires less and less sample. Accordingly, a sufficiency threshold can be established with respect to a particular assay. An adequacy threshold can be expressed as a probabilistic relationship between amounts of sample and the probability that the sample is sufficient for detection of a true positive.

vi) Transferring the said first subvolume of the liquid cell sample to a second vial (7). In a preferred embodiment, this second sample vial is mounted on a microscope slide (6).

vii) Preserving a second subvolume of the liquid cell sample for said second analysis technique. In a first embodiment, preservation can occur in the same sample vials as used to provide the sample with. In another embodiment, the entire or part of the sample may be transferred to another sample vial for preservation and storage.

As mentioned above, the DHM step of the method will allow obtaining data comprising a range of parameters related to the sample. In a preferred embodiment, these data comprise at least the size of a cell, the morphology of a cell, the number of cells, cell density, ratio between nucleus and cytoplasm of a cell and the optical density of a cell present in the liquid cell sample. In another preferred embodiment, these data are compared and correlated with a reference database comprising a set of cellular parameters. Based upon the data obtained by DHM and their correlation with the said reference database of known cellular parameters, a digital report will be created, that is provided to the end user. In a preferred embodiment, the report comprises an identification tag or indicia which make it possible to correlate the report with the original sample in the sample vial.

The method therefor provides for an identification step of the sample vial and marking step of all derivatives obtained during the process. In a first step, the sample vials are provided with indicia (8). These indicia are in a second step identified by identification means. In a third step, the corresponding derivatives of the sample are marked with corresponding indicia to the ones provided on the sample vial. In one embodiment, these corresponding indicia may be identical to the ones provided on the sample vial. In another preferred embodiment, these may comprise the entire indicia or part of the indicia found back on the sample vial with some additional information or data. In yet another embodiment, these indicia may comprise a code that is linked with the indicia on the original sample vial.

In a final step, the first volume of the liquid cell sample transferred to a second sample vial (7) might be subjected to a centrifugation step. Therefore, the said first sample vial might be part of a cytocentrifuge and be mounted on a carrier plate (13) provided with a microscope slide (6). In one embodiment, the cells are immediately deposited on the microscope slide by one centrifugation step. In another embodiment, the second sample vials may comprise a density liquid. In a first centrifugation step, performed at a low centrifugation force, the cells will be separated from cell debris, blood, mucus and unwanted contaminant particles. In a second centrifugation step, which will occur at a higher centrifugation force than the first, the cells will be deposited on the carrier.

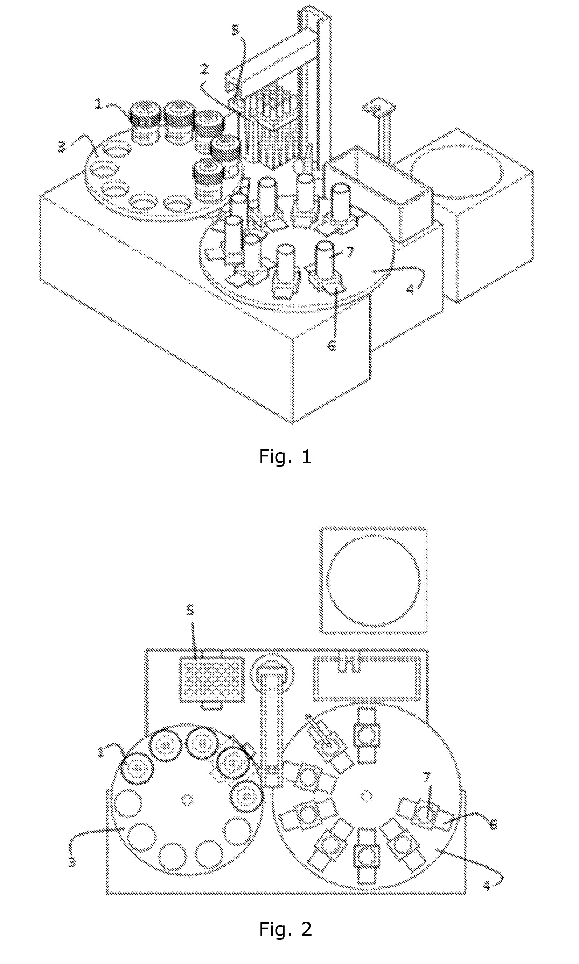

The current invention relates furthermore to a system that deploys the method mentioned above. Referring to figure 1 and 2, a composite modular system is shown for processing a sample vial according to the present invention. In a first aspect, the system includes several loading stations, one for receiving a plurality of patient samples (3), each provided with a sample vial (1), and others for receiving for instance the intermediate sample vessels (5), and the second and potential subsequent sample vials (4).

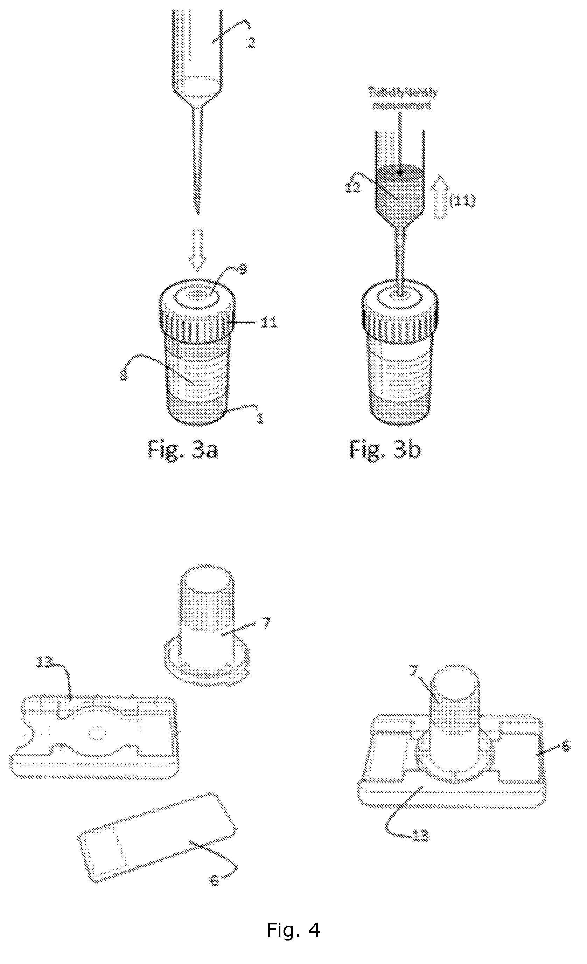

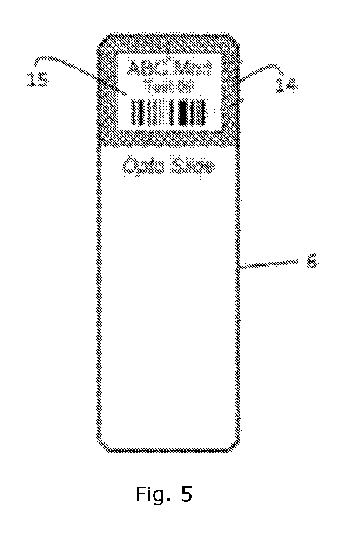

In a preferred embodiment, the second sample vials may be sample vials or chambers (7), mounted on a carrier plate (13), provided with a microscope slide (6), as enclosed in EP 2 264 424 (Fig. 4). In particular, the sample chamber (7) is adapted for use in a centrifugation assembly suitable to temporarily attach a carrier plate (13) with slide (6). As shown on figure 5, the said microscope slides may be provided with an identification zone (15) comprising a markable region (14) with an electromagnetic radiation-sensitive coating that changes colour permanently on exposure to electromagnetic radiation of a diode-laser, as disclosed by EP 2 226 67. With the term "sensitive to electromagnetic radiation" it is meant that the appearance of the coating changes following electromagnetic radiation. With the term "changes colour permanently on exposure" it is meant that a colour change is irreversibly effected in the coating; that is without removal of coating material such as e.g. by laser ablation, or carbonization. This has for advantage that contamination of a microscope slide or a sample on a microscope slide is avoided. It also has the advantage that surface modifications such as the formation of craters or edges or foamed parts, are reduced. In a preferred embodiment, said coating and said markable region are resistant to laboratory solvents, reagents, stains and chemicals, which may remove, blur or obscure critical information on slides.

In another preferred embodiment, the second sample vials (7) contain a density liquid with a volume of about 1 to 1.5 ml. In a first centrifugation step, the cells are collected in the density liquid due to a higher ration of centrifugal forces over flow resistance forces on them, while less dense structures like erythrocyte fragments, mucus and very small protein particles remain in the supernatant or in the upper part of the density liquid. This first centrifugation step is only performed for a time duration of approximately 1-2 minutes and the centrifugal forces applied are approximately 80 to 90 g. After the first centrifugation step the supernatant is to be removed until the border between the density liquid and the collection liquid. According to the present invention it is also possible to remove a small amount of the density liquid (the upper part), if the cells are strongly spoiled with blood and mucus. The contaminant particles may enter the upper layer of the density liquid and this becomes especially apparent in case of a large concentration. In another embodiment, the supernatant does not necessarily need to be removed after the first centrifugation step, it can also be removed at the beginning of the second or in a break between the first and the second step. Preferably, this is done near the end of the first step, otherwise cells to be examined may be removed unwantedly. Furthermore, it is possible to remove the supernatant during the first and/or the second centrifugation step. This is, for instance, done by a suction system with a tube or by an overflow system in the vessel. An overflow system is for example possible through a valve in the upper part of the vessel, which opens near the end of the first centrifugation step and releases the supernatant.

The second centrifugation step is performed in a cytocentrifuge for only 2 minutes with 900 g centrifugal force. Since the liquid cell sample is in a vessel (7), which is provided with a microscope slide (6) as shown in Figure 4, the cells are directly deposited on the microscope slide.

A computer controller or processor is provided to communicate with and coordinate operation of the various sensors and components of the system to permit automatic, unattended operation during specimen preparation. The processor includes an appropriate operator interface with associated input keypad or buttons and an output display, such as a liquid crystal diode display. Instructions, prompts, and error messages may be in text, error code, or symbol formats. Text displays may be in a variety of operator selectable languages, such as English, French, German, Italian, Japanese, and Spanish. Audible outputs corresponding to operator prompts, error conditions, keypad inputs, and completion of automatic processing may be provided.

Upon starting the system, a first biological sample from a sample vial is transferred to an intermediate sample vessel. Figures 3a and 3b refer to the preferred method of transferring a sample from the initial sample vial. In a preferred embodiment, the said intermediate sample vessel is an automated pipette (2). In another preferred embodiment, the sample vial has a flexible septum (9) embedded in the vial cap (10), comprising two polymeric layers, which is penetrable. The said pipette is capable of penetrating the said flexible septum in the cap of said sample vial and can take up the content (11) of the vial (Fig. 3a and 3b). After penetrating the septum by a needle of pipette tip, the content of the sample vial will remain its sterility, as no contaminants will be able to enter through the septum. Vice versa, no liquid will be able to leak from the sample vial. The septum will remain airtight even after been punctured and removal of the needle or pipette tip. In a next step, the pipette will be used to transfer said sample to the various sample vials. The said intermediate sample vessel will be presented to a turbidity meter to measure the density of the biological sample (12). The sample in the intermediate sample vessel gets illuminated by a light source and a detector measures the dispersion of light. The light source is for example an electroluminescent diode (ELD). The cell density of the sample is determined by the degree of light dispersion detected by the detector.

The measured density is compared with a threshold density which is substantially equal to the minimum density in order to obtain an adequate result in the analyses which are to be performed downstream. A processor in contact with the turbidity meter will calculate the required subvolumes to be transferred to the vials for further analysis purposes. The sample surplus will be transferred back to the initial sample vial. In one embodiment, the threshold density is set out by the Bethesda classification, for obtaining an adequate thin layer of cells on a substrate. In a second embodiment, the threshold is set out for an HPV analysis technique.

In a further embodiment, the sample within the intermediate sample vessel is analyzed by Digital Holographic Microscopy (DHM).

Digital Holographic Microscopy (DHM) is a technique which allows a recording of a 3D sample or object without the need of scanning the sample layer-by-layer. In this respect DHM is a superior technique to confocal microscopy. In DHM, a holographic representation is recorded by a digital camera such as a CCD- or a CMOS-camera, which can subsequently be stored or processed on a computer.

To make a holographic representation, or hologram, traditionally a highly coherent light source such as laser-light, is used to illuminate the sample. In the most basic set-up, the light form the source is split into two beams, an object beam and a reference beam. The object beam is sent via an optical system to the sample and interacts with it, thereby altering the phase and amplitude of the light depending on the object's optical properties and 3D shape. The object beam which has been reflected on or transmitted through the sample, is then made (e.g. by set of mirrors and/or beam splitters) to interfere with the reference beam, resulting in an interference pattern which is digitally recorded. Since the hologram is more accurate when object beam and reference beam have comparable amplitude, an absorptive element can be introduced in the reference beam which decreases its amplitude to the level of the object beam, but does not alter the phase of the reference beam or at most changes the phase globally, i.e. not dependent on where and how the reference beam passes through the absorptive element. The recorded interference pattern contains information on the phase and amplitude changes which depend on the object's optical properties and 3D shape.

An alternative way of making a hologram is by using the in-line holographic technique. In-line DHM is similar to the more traditional DHM, but does not split the beam, at least not by a beam splitter or other external optical element. In-line DHM is most preferably used to look at a not-too-dense solution of particles, e.g. cells, in a fluid. Thereby some part of the at least partially coherent light will pass through the sample without interacting with the particles (reference beam) and interfere with light that has interacted with the particles (object beam), giving rise to an interference pattern which is recorded digitally and processed. In-line DHM is used in transmission mode, it needs light with a relatively large coherence length, and cannot be used if the samples are too thick or dense.

Another DHM technique called differential DHM (DDHM) is disclosed in European patent EP 1 631 788. DDHM is different to the other techniques in that it does not really make use of reference and object beams. In a preferred set-up of DDHM, the sample is illuminated by at least partially coherent light in reflection or in transmission mode. The reflected or transmitted beam can be sent through an objective lens and subsequently split in two by a beam splitter and sent along different paths in a differential interferometer, e.g. of the Michelson or Mach-Zehnder type. In one of the paths, a beam-bending element or tilting means is inserted, e.g. a transparent wedge. The two beams are then made to interfere with each other in the focal plane of a focusing lens and the interference pattern in this focal plane is recorded digitally and stored by e.g. a CCD-camera connected to a computer. Hereby, due to the beam-bending element, the two beams are slightly shifted in a controlled way and the interference pattern depends on the amount of shifting. Then the beam-bending element is turned, thereby altering the amount of shifting. The new interference pattern is also recorded. This can be done a number N of times, and from these N interference patterns, the gradient (or spatial derivative) of the phase in the focal plane of the focusing lens can be approximately computed. This is called the phase-stepping method, but other methods of obtaining the phase gradient are also known, such as a Fourier transform data processing technique. The gradient of the phase can be integrated to give the phase as a function of position. The amplitude of the light as a function of position can be computed from the possibly but not necessarily weighted average of the amplitudes of the N recorded interference patterns. Since phase and amplitude are thus known, the same information is obtained as in a direct holographic method (using a reference and an object beam), and a subsequent 3D reconstruction of the object can be performed.

In the most preferred embodiment, the digital holographic microscope used in the system is of the type of the differential digital holographic microscope (DDHM) as outlined above. The signals recorded by the DDHM are sent to computer processing and image analysis means, for processing the said signals. A range of data is obtained through the processing of these signals, which correlate to the status of the biological sample and more specifically give information on the characteristics of the cells present in the biological sample. The said range of data may include amongst others the size of a cell, the morphology of a cell, the number of cells, cell density, the ratio between nucleus and cytoplasm of a cell and the optical density of a cell present in the said liquid cell sample. The data obtained by DDHM is subsequently compared and correlated with a reference database comprising a vast set of well-known cellular parameters.

The term "reference database" as used herein refers to any suitable collection of data comprising information on at least one of the above mentioned parameters, including cell size, cell morphology, number of cells in a defined area, optical density of the nucleus of cell, ratio between cytoplasm and nucleus of a cell, color of a cell, color of a nucleus, color of a cell wall, number and form of internal cellular structures like the number and form of vacuoles, the number and form of mitochondria, division related structures like chromosomal structures, form, size, morphology of the nucleus and/or the location of the nucleus within the cell, association of cells, the degree of independence of cells, volume of a cell, proportion of the length of the cell wall to the cell size, number of identical or similar cells in an image, or number of ruptures, fissures, holes or visible pores in a cell. The corresponding information may be stored in any suitable format and may be accessed during and/or after the step of establishing the cellular parameter according to the present invention. The comparison process may be carried out automatically, e.g. by a data processing unit, a computer or an electronic device performing an algorithm to compare said data with a database of known cellular parameters. Alternatively, the parameters may be compared manually, i.e. by an operator.

The reference parameters or the reference information may additionally or alternatively be stored in the form of predefined threshold values, which allow a fast and reliable comparison of measured values with predefined default values, e.g. of specific cell or tissue type. Once such threshold values are not met, an alert or information signal may be generated informing the practitioner or operator about a sub-optimal or not met parameter criterion.

In a preferred embodiment, the system will provide a digital report and image of the sample, based on the data collected by the DDHM and the comparison of the data with the said reference database.

In one embodiment, the practitioner or pathologist may decide, based on the outcome of the data contained in digital report and the image made by the digital holographic microscope, on the quality of the sample, as well as decide whether further processing of the sample to the second and subsequent sample vials is still required. When for instance the parameters provided by the DHM system do not contain any indications towards the presence of malignant or aberrant cells, the system might be instructed to skip the subsequent sample handling. On the other hand, if any parameters indicate that the cell sample will need further inquiring, through more conventional screening methods such as a for instance a PAP smear or an HPV test, the system can be instructed to start the further processing. In another embodiment, the processing of the samples is routinely performed, regardless of the state of the digital report of the sample.

In order for the system to maintain an association between each sample vial and its corresponding derivatives thereof (such as the second and potential subsequent sample vials, the microscope slide, the digital report and the digital image), an identification correlation system is provided. In accordance with one embodiment of the present invention, identifying indicia (8) are provided on the sample vial in order to prepare a derivative from a sample vial. In a most preferred embodiment, these identifying indicia may comprise an RFID tag, which corresponds to and uniquely identifies the vial and the sample contained therein.

In another embodiment, the indicia (8) may comprise a bar code.

The indicia are read by identifying means, such as a laser scanner bar code reader in the case of the indicia being a bar code, or a RFID reader in the case of the indicia being an RFID tag, so that the particular vial can be identified.

In one embodiment, the indicia (8) are provided on the base of the sample vial. In this case, the identifier is positioned underneath the sample vial loading station. In one embodiment, the sample vial loading station is able to move to different positions while the identifier is stationary. In another embodiment, the sample vial loading station is stationary and the identifier rotates with respect to the position of the sample vials. In another embodiment, the indicia (8) are provided on the lateral side of the sample vial. The sample vial can hence be transferred from the loading station by a vial transfer assembly and presented to the identifier. After identifying the indicia, the sample vial can be transferred back to its initial position at the loading station.

After the indicia of a first sample vial have been read by the identifier, and communicated to the processor, the processor will instruct the marker to mark the corresponding derivatives such as a microscope slide (6) prior to sample handling. Likewise, the processor will instruct the computer processing and image analysis means to link the indicia on the sample vial to the digital report and image obtained. In one embodiment, the indicia on the second sample vial comprise a bar code.

The processor will instruct the sample vial loading station to rotate to the position where the next sample vial is located. The identification and transferring process will then restart.

In one embodiment, the marker can be an ink jet printer which prints directly onto the surface of the recipient, or onto an adhesive label attached to the recipient. Preferentially, the printing media used should be resistant to solvents that are commonly used in potential subsequent procedures. For instance, immunostaining procedures of cells attached on a stratum, such as a microscope slide, often involve solvents with a high or low pH, as well as alcoholic solvents. These are known to be disadvantageous and harmful to certain inks used during the marking process. In a preferred embodiment, the writing device comprises a laser, more specifically a diode laser, such as a direct diode or diode pumped laser. Diode-lasers have a rugged structure, small size, high efficiency. They consume considerably less electric energy as direct pumping is by low-power electric current. The output of a diode-laser can be modulated by direct modulation of a pumping current at rates exceeding 1 kHz. This modulation at high velocity is beneficial for a marking process of a barcode, for instance. Its output beam dimensions are compatible with those of optical fibers. Consequently, there is no requirement for perpendicular placement of the laser to a sample processing line. Hence, equipment can be made more compact. As diode-lasers are less expensive than high powered lasers, investment costs can be reduced. The equipment becomes more affordable to smaller laboratories. In a preferred embodiment, a diode laser is used at a wavelength relative to the chemical composition of a pigment on surface to be marked. In a preferred embodiment a wavelength emitted by a diode laser corresponds to an excitation wavelength of a pigment resulting in a visible marking. When the wavelength of the laser is adjusted to the characteristics of the pigment, whereby an emission wavelength of the laser matches an excitation wavelength of the pigment, this will result in a visible and permanent color change. A color change in the pigment is triggered with the wavelength of the laser. The advantage is minimum heating of a coating and/or carrier such as glass. This is the subject of EP 2226671.

In a preferred embodiment, one of the loading stations is part of a centrifuge, more preferably a cytocentrifuge. The said vials that receive a sub-volume of the sample are provided with a microscope slide (6) which is attached to the vial (7). As shown in Figure 4, in a preferred embodiment, the assembly comprises a substantially tubular chamber (7) provided at its base with an extending rim whereby said extending rim is provided at its circumference with wedge-shaped locking means comprising a surface perpendicular to the longitudinal axis of said tubular chamber and horizontal to the bottom surface of said extending rim; and whereby said tubular chamber is provided at its base with an annular sealing means, whereby said sealing means is provided inside said cylindrical tubular chamber and extending rim, characterized in that, said annular sealing means has a first diameter corresponding to the inner diameter of said tubular chamber (7), a second diameter corresponding to the outer diameter of said tubular chamber and a third diameter corresponding to the outer diameter of said extending rim.

As mentioned here above and outlined in Figure 5, in a most preferred embodiment, the microscope slide (6) is provided with a markable region (14) which comprises a coating which is sensitive to electromagnetic radiation that changes color permanently on exposure to electromagnetic radiation. With the term "sensitive to electromagnetic radiation" it is meant that the appearance of the coating changes following electromagnetic radiation. With the term "changes color permanently on exposure" it is meant that a color change is irreversibly effected in the coating; that is without removal of coating material such as e.g. by laser ablation, or carbonization. This has for advantage that contamination of a microscope slide or a sample on a microscope slide is avoided. It also has the advantage that surface modifications such as the formation of craters or edges or foamed parts, are reduced. Furthermore, the said coating and said markable region are resistant to laboratory solvents, reagents, stains and chemicals, which may remove, blur or obscure critical information on slides.

Once the system is loaded with the samples and consumables by the operator, the system runs in an automated manner under control of the processor until all sample vials are processed, or until such time as a system malfunction occurs or a consumable, such as sample recipients or pipettes, is depleted. When required, sensors may be provided to monitor levels in the waste bottle and waste bin, so that the operator can be alerted to elevated levels of waste, which could interrupt processing during automatic cycling.

Accordingly, when the operator initiates automatic processing, for example, by selecting "Start Batch" from a menu on the display or using a dedicated keypad input, the system checks that sample vials and recipients are loaded and when applicable, a minimum number of necessary consumables are available to complete processing of all the samples. If sufficient consumables and waste capacities exist, the system starts the automatic sample processing cycle. The cycle continues until the entire loaded sample vials have been processed, the operator manually interrupts the cycle or a system error occurs which cannot be automatically rectified. If insufficient consumables or waste capacities exist, the operator may correct the condition or, alternatively, override the system and initiate automatic processing anyway. In the event a prior automatic cycle had been interrupted, "Start Batch" may be used to resume automatic cycling at the point of interruption, after checking system consumables and capacities.

If the operator chooses to interrupt the automatic cycle prior to completion, the operator may select "Interrupt Batch". Upon receipt of the interrupt signal, the processor interrupts the automatic cycle in an orderly manner, for example, by completing preparation of a specimen in process. After that sample processing cycle has been completed and moving components are at rest at respective home positions, the operator access interlocks are unlatched and the operator is notified. The operator may then open the upper cover or access other internal areas of the system, as desired.

A "Maintenance" function can also be provided in which the system supports operator level maintenance activities such as jogging of the moving components to or from respective home positions to provide the operator access to various interior volumes of the system, for example, to clear a jam or to retrieve a mishandled recipient. Other maintenance functions may include emptying of the waste bottle and bin.

A usage log may be provided to track total number of samples processed, total number of specimens produced, total system run time, and other relevant usage parameters. The processor may also maintain an error log which lists, for example, the last fifty errors detected by the system and which may be displayed or printed at the discretion of the operator. A typical log entry may include date and time of the error, sample indicia and loading station location, and disposition or corrective action.

Detectable conditions that could cause specimen quality problems are flagged by the system and noted to the operator on the display and paper printout. If possible, a partially collected specimen is returned to the vial and preparation of the recipient is aborted. If the problem is associated with a particular selected sample vial, such as an unreadable bar code, the system recovers after recording the error, processing the remaining sample vials in the batch. However, if the error is a system level problem, such as a motor or sensor failure, jammed mechanism, or other malfunction that is not automatically recoverable and requires operator or qualified service personnel intervention, the automatic cycle is halted and the error recorded and reported to the operator.

Upon installation or commissioning of the system, or thereafter as required, the processor may be initialized and setup functions enabled or disabled. For example, the date and time may be input, as well as the respective formats thereof. A system printer may be provided and may be directed to automatically print diagnostic test results or sample processing data at the end of every automatic batch cycle. A date/time stamp may be enabled to print the date and time a specimen was prepared on the recipient, in addition to the recipient indicia. Optionally, the name or other identifier of the cytological laboratory preparing the specimen with the system may be printed on the recipient as well.

While there have been described herein what are to be considered exemplary and preferred embodiments of the present invention, other modifications of the invention will become apparent to those skilled in the art from the teachings herein. For example, while the system and method have been described for preparing a single specimen from each sample vial, the system could be programmed to permit two or more specimens to be prepared from a single sample vial.

The disclosed components of the system may be manufactured in various sizes, configurations, and materials. Additionally, the system may be used to prepare specimens from various cytological samples, such as cells sourced from fine needle aspirates, from mucoid specimens taken from respiratory and gastrointestinal tracts, from body fluids such as serous effusions and urinary and cerebrospinal fluids, from superficial brushings and scrapings from oral cavities, nipple secretions, skin lesions, and eye brushings, and from other sources.

## Claims

1. A method for processing a liquid cell sample into at least two subsamples, comprising the steps of:

   a) providing a liquid cell sample in a first sample vial;
   b) transferring a first volume of said liquid cell sample into an intermediate sample vessel;
   c) determining the density of said liquid cell sample in said intermediate sample vessel;
   d) calculating a first subvolume of said liquid cell sample in the intermediate sample vessel for a first analysis technique; preferably for a thin cell layer analysis;
   e) determining whether said liquid cell sample is adequate for a second analysis technique, preferably suitable for DNA or RNA based detection of for example HPV, based on said density determination;
   f) transferring from the said intermediate sample vessel said first subvolume to a second vial mounted on a microscope slide; and
   g) preserving a second subvolume of said liquid cell sample for said second analysis technique.

2. A method according to claim 1, whereby said density is determined by measuring turbidity.

3. A method according to claim 2, whereby said density is further determined by differential digital holographic microscopy.

4. A method according to claim 3, whereby data comprising a range of parameters of the said sample is obtained by the differential digital holographic microscope.

5. A method according to claim 4, whereby said obtaining said data, comprises the steps of

   a) illuminating in transmission and/or in reflection with illumination means said sample in said intermediate sample vessel, whereby said illumination means preferably comprise spatially and temporally partially coherent light;
   b) generating by means of the differential interferometer interfering beams from said sample beam;
   c) detecting and recording the fringe interference image thus formed by the interfering beams on the sensor of the imaging device;
   d) sending the interference image to processing means, such as a computer;
   e) processing said interference image(s) so as to extract the optical amplitude and/or phase of the sample by implementation of the phase stepping method or the Fourier transform data processing; and
   f) computing said data linked to the cells in the sample from said optical amplitude and/or phase of said liquid cell sample.

6. A method according to claim 5, whereby the said data obtained by differential digital holographic microscopy are compared and correlated with a reference database comprising a set of cellular parameters.

7. A method according to claim 6, whereby said the data comprise at least the size of a cell, the morphology of a cell, the number of cells, cell density, the ratio between nucleus and cytoplasm of a cell and the optical density of a cell present in the said liquid cell sample.

8. A method according to claim 7, whereby a digital report of the sample is created based upon the said data obtained by digital holographic microscopy and said correlation of said data with reference database of known cellular parameters.

9. A method according to any of the claims 1-8, comprising further the steps of:

   a) providing said first sample vial with indicia;
   b) identifying said indicia of the sample vial;
   c) marking indicia to said microscope slide, which correspond to said indicia on said sample vial;
   d) linking said indicia of said sample vial and microscope slide to said data and said digital report made thereof.

10. A method according to claim 9, whereby said indicia on said sample vial comprise an RFID tag.

11. A system for processing a liquid cell sample, into two different subsamples, comprising:

  a) means for transferring said sample;
  b) loading trays for holding said sample vials;
  c) means for determining density of the said sample;
  d) a processor;
  e) an identifier in communication with the processor for identifying indicia corresponding to the sample;
  f) a marker in communication with the processor for marking indicia on the microscope slide corresponding to the sample vial.

12. A system according to claim 11, whereby said means for determining the said sample density is a turbidity meter or a differential digital holographic microscope.

13. A system according to claim 12, comprising computer processing and image analysis means which receive the signals recorded by the said digital holographic microscope and which process said signals in order to obtain a range of data linked to the analyzed sample.

14. A system according to claim 13, whereby a data processing unit, a computer or an electronic device is capable of performing an algorithm to compare said data with a reference database of known cellular parameters.

15. A system according to claim 14, comprising a computer or printer capable of providing a report based on the comparison of said data and said reference database, whereby said report is correlated with said indicia on said sample vial.

Fig. 1

Fig. 2

Fig. 3a   Fig. 3b

Fig. 4

Fig. 5

Europäisches
Patentamt

European
Patent Office

Office européen
des brevets

# EUROPEAN SEARCH REPORT

Application Number

EP 11 17 4554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 841 556 A1 (BECKMAN INSTRUMENTS INC [US]) 13 May 1998 (1998-05-13) | 11-15 | INV. G01N1/28 |
| Y | * column 1, line 11 - line 17 * <br> * column 3, line 50 - line 57 * <br> * column 5, line 54 - column 6, line 16; figures 1,2 * <br> * column 9, line 15 - line 25 * <br> * column 10, line 41 - column 12, line 6; figure 4 * | 1-10 | G01N15/14 G01N35/00 C12Q1/70 G01N21/59 G03H1/08 |
| A | US 2003/088963 A1 (MAYER WILLIAM J [US]) 15 May 2003 (2003-05-15) * paragraphs [0133], [0154], [0155], [0162]; figure 17 * | 1,8,15 | |
| A | WO 02/095675 A1 (SCOTT LAB INC [US]) 28 November 2002 (2002-11-28) * page 9, line 25 - page 10, line 2; figure 2 * | 10,11 | |
| A | US 6 387 653 B1 (VONEIFF JOHN [US] ET AL) 14 May 2002 (2002-05-14) * column 11, line 7 - line 20; figure 3 * | 11 | TECHNICAL FIELDS SEARCHED (IPC) |
| Y | EP 2 264 424 A1 (SWITCH BVBA [BE]) 22 December 2010 (2010-12-22) * paragraphs [0002], [0027], [0038] - [0040]; figures 5A-C * | 1-10 | G01N G03H C12Q |

The present search report has been drawn up for all claims

| Place of search | Date of completion of the search | Examiner |
|---|---|---|
| The Hague | 28 November 2011 | Eidmann, Gunnar |

**ANNEX TO THE EUROPEAN SEARCH REPORT
ON EUROPEAN PATENT APPLICATION NO.**                    EP 11 17 4554

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2011

| Patent document cited in search report | | Publication date | Patent family member(s) | | Publication date |
|---|---|---|---|---|---|
| EP 0841556 | A1 | 13-05-1998 | EP | 0841556 A1 | 13-05-1998 |
| | | | JP | 3255597 B2 | 12-02-2002 |
| | | | JP | 10153597 A | 09-06-1998 |
| US 2003088963 | A1 | 15-05-2003 | US | 2003088963 A1 | 15-05-2003 |
| | | | US | 2008209709 A1 | 04-09-2008 |
| WO 02095675 | A1 | 28-11-2002 | AU | 2008200356 A1 | 14-02-2008 |
| | | | AU | 2009238236 A1 | 03-12-2009 |
| | | | CA | 2448264 A1 | 28-11-2002 |
| | | | CN | 1545681 A | 10-11-2004 |
| | | | EP | 1402470 A1 | 31-03-2004 |
| | | | JP | 4590161 B2 | 01-12-2010 |
| | | | JP | 2005514965 A | 26-05-2005 |
| | | | MX | PA03010741 A | 07-03-2005 |
| | | | US | 2002188259 A1 | 12-12-2002 |
| | | | US | 2008061153 A1 | 13-03-2008 |
| | | | WO | 02095675 A1 | 28-11-2002 |
| US 6387653 | B1 | 14-05-2002 | AT | 356984 T | 15-04-2007 |
| | | | AU | 4212600 A | 14-11-2000 |
| | | | CA | 2369008 A1 | 19-10-2000 |
| | | | DE | 60033923 T2 | 22-11-2007 |
| | | | EP | 1171760 A1 | 16-01-2002 |
| | | | US | 6387653 B1 | 14-05-2002 |
| | | | US | 2003022271 A1 | 30-01-2003 |
| | | | WO | 0062035 A1 | 19-10-2000 |
| EP 2264424 | A1 | 22-12-2010 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2270712 A
- WO 2010049651 A
- US 20100060897 A
- EP 2264424 A
- EP 222667 A
- EP 1631788 A

### Non-patent literature cited in the description

- Bethesda system for reporting cervical/vaginal cytological diagnoses. *Acta Cytol.,* 1993, vol. 37, 115
- **JUNQUEIRA et al.** Basic Histology. 2002